Europäisches Patentamt

European Patent Office

Office européen des brevets

(19)

(11) EP 1 054 394 B1

(12) EUROPEAN PATENT SPECIFICATION

(45) Date of publication and mention
of the grant of the patent:
**01.12.2004   Bulletin 2004/49**

(51) Int Cl.7: **G11B 7/24**, G11B 7/135

(21) Application number: **00304112.6**

(22) Date of filing: **16.05.2000**

(54) **Optical recording medium reducing optical spot size.**

Optisches Aufzeichnungsmedium zum Verringern der Grösse eines optischen Lichtpunktes

Support d'enregistrement optique pour la réduction de la taille d'une tache optique

(84) Designated Contracting States:
**DE FR GB NL**

(30) Priority:   **17.05.1999   KR 9917548**

(43) Date of publication of application:
**22.11.2000   Bulletin 2000/47**

(73) Proprietor: **SAMSUNG ELECTRONICS CO. LTD.
Suwon-city, Kyungki-do (KR)**

(72) Inventors:
• **Lee, Chul-Woo
Pundang-gu, Sungnam-city, Kyungki-do (KR)**
• **Shin, Dong-Ho
Seodaemun-gu, Seoul (KR)**
• **Jung, Seung-Tae
Pundang-gu, Sungnam-city, Kyungki-do (KR)**
• **Cho, Kun-Ho
Suwon-city, Kyungki-do (KR)**
• **Yoo, Jang-Hoon
dong, Youngdungpo-gu, Seoul (KR)**

(74) Representative: **Chugg, David John et al
Appleyard Lees,
15 Clare Road
Halifax, West Yorkshire HX1 2HY (GB)**

(56) References cited:
**EP-A- 0 911 653          US-A- 5 125 750**

• **PATENT ABSTRACTS OF JAPAN vol. 1999, no.
10, 31 August 1999 (1999-08-31) -& JP 11 126370
A (PIONEER ELECTRON CORP), 11 May 1999
(1999-05-11)**
• **PATENT ABSTRACTS OF JAPAN vol. 018, no.
539 (P-1812), 13 October 1994 (1994-10-13) -& JP
06 187665 A (HITACHI LTD;OTHERS: 01), 8 July
1994 (1994-07-08)**

## Description

The present invention relates to an optical recording medium having a construction which allows the reduction of an optical spot size formed on such a medium.

A variety of methods for enhancing a recording density in an optical recording medium are being under research and development. One of them is a method for reducing an optical spot size formed on an optical recording medium. A size d of an optical spot formed on an optical recording medium is determined by $\lambda / (n \sin\theta)$, in which is $\lambda$ a wavelength of light, n is a refractive index of the optical recording medium, and $\theta$ is an incident angle. The size of the optical spot can be reduced by adjusting the wavelength of light, the refractive index of the optical recording medium, and the incident angle. However, there is a limit in practice to reducing the optical spot size by adjusting the wavelength of light, the refractive index of the optical recording medium, and the incident angle.

JP-A-11126370 reflecting the preamble of claims 1 and 6 discloses an optical recording medium having a metal reflecting layer.

With a view to solve or reduce the above problem, it is an aim of preferred embodiments of the present invention to provide an optical recording medium having an enhanced recording density by presenting a new variable which can reduce an optical spot size in addition to a wavelength of light, a refractive index of an optical recording medium, and an incident angle.

According to a first aspect of the present invention there is provided an optical recording system on which an optical spot is formed by a focusing device upon an optical recording medium, the optical recording medium comprising: a metal film which is formed on an information recording layer opposing the focusing device, for reflecting light incident from the focusing device; characterised by: the metal film also transmitting light incident from the focusing device; wherein a relationship of $n1 \mathrm{Sin}\theta1 < n2 < n1$ is satisfied where n1 is a refractive index of the focusing device, $\theta1$ is an incident angle, and n2 is a refractive index of the metal film, and wherein n2 is less than one.

Preferably, the thickness of said metal film has a value which is less than a wavelength of light used.

Preferably, said metal film is formed within a depth of focus of the focusing device.

Preferably, said metal film comprises any one of copper, silver, gold and sodium.

According to a second aspect of the invention there is provided an optical recording medium adapted for use with the first aspect of the present invention.

According to a third aspect of the invention, there is provided an optical recording medium on which an optical spot is formed by a focusing device, the optical recording medium comprising: a metal film which is formed on a surface of an information recording layer of the medium furthest away from the focussing device such that, the information recording layer is interposed between the metal film and the focusing device, the metal film, for reflecting and transmitting light incident from the focusing device, wherein a relationship of $n1 \mathrm{Sin}\theta1 < n2 < n1$ is satisfied wherein, n1 is a refractive index of the focusing device, $\theta1$ is an incident angle, and n2 is a refractive index of the metal film, and wherein n2 is less than one.

According to a fourth aspect of the present invention there is provided an optical recording medium adapted for use with the third aspect of the present invention.

According to a fifth aspect of the invention, there is provided an objective lens generating near field, the objective lens comprising: a lens portion for reflecting and refracting an incident light and focusing the incident light on information recording layer of an optical recording medium; and a metal film which is formed on the lens portion opposing the information recording layer of the optical recording medium, for reflecting and transmitting light incident from the lens portion, wherein a relationship of $n1 \mathrm{Sin}\theta1 < n2 < n1$ is satisfied where n1 is a refractive index of the lens portion, $\theta1$ is an incident angle, and n2 is a refractive index of the metal film, and wherein n2 is less than one.

For a better understanding of the invention, and to show how embodiments of the same may be carried into effect, reference will now be made, by way of example, to the accompanying diagrammatic drawings in which:

Figure 1 a view for explaining a function of a metal film coated on a general optical recording medium;

Figures 2A and 2B show a focusing optical system using a near field according to an embodiment of the present invention, respectively;

Figures 3A and 3B are an enlarged view showing a portion "A" in Figures 2A and 2B;

Figure 4 is a view for explaining a function of a thin metal film coated on an optical recording medium according to the present invention;

Figure 5 shows a focusing optical system using a far field according to another embodiment of the present invention; and

Figure 6 is an enlarged view showing a portion "B" in Figure 5.

Preferred embodiments of the present invention will be described in detail with reference to the accompanying drawings.

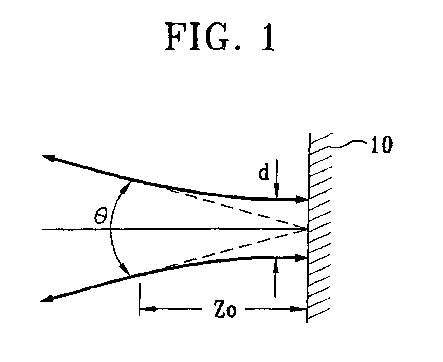

A metal film which reflects incident light is coated on a general optical recording medium. As shown in Figure 1, a metal film 10 substantially totally (100%) reflects light incident to an optical recording medium and further substantially blocks transmission of the same (substantially 0% transmission). A reference symbol $Z_0$ represents a depth of focus.

In contrast to the above, the present invention proposes an optical recording medium on which a thin metal film both reflects and transmits incident light.

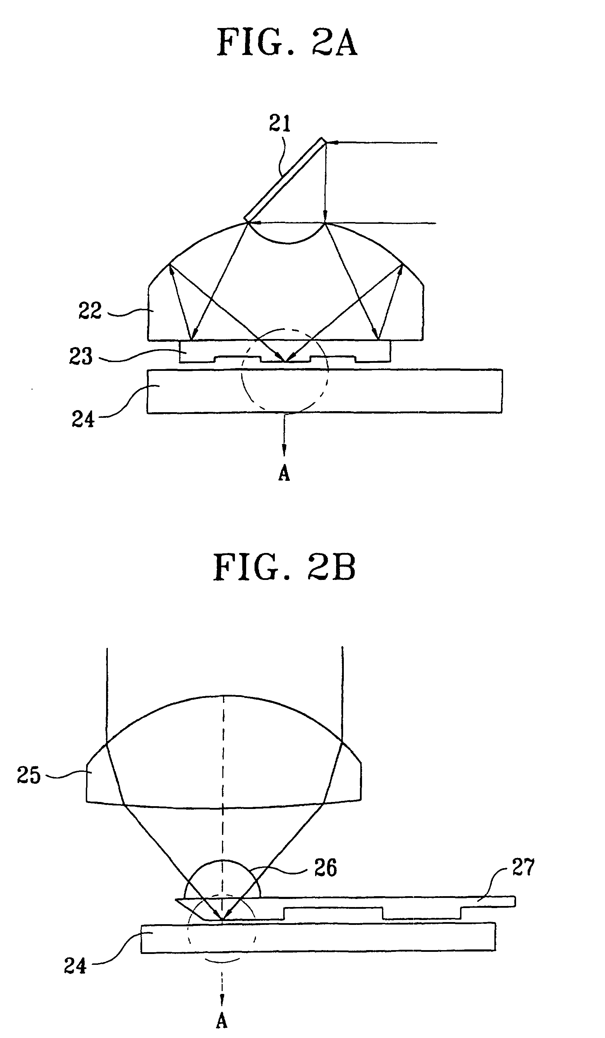

Figure 2A shows an optical recording medium and a focusing optical system using a near field according to an embodiment of the present invention.

The focusing optical system using a near field of Figure 2A includes a reflective mirror 21 for reflecting incident light toward an optical recording medium 24, a solid immersion mirror (SIM) 22 for reflecting and refracting the light reflected from the reflective mirror 21, and a slider 23 for moving the SIM 22 in relation to the surface of the optical recording medium 24. The slider 23 maintains a distance between the SIM 22 and the optical recording medium 24 to be less than a predetermined length. Here, the distance between the SIM 22 and the optical recording medium 24 is called an air gap. It is preferable that the air gap is less than the wavelength of light.

Figure 2B shows another focusing optical system using a near field. The focusing optical system includes an aspherical lens 25 for refracting incident light, a solid immersion lens (SIL) 26 for focusing the light incident from the aspherical lens 25 on an information recording layer of the optical recording medium 24, and a slider 27 for moving the SIL 26 in relation to the optical recording medium 24.

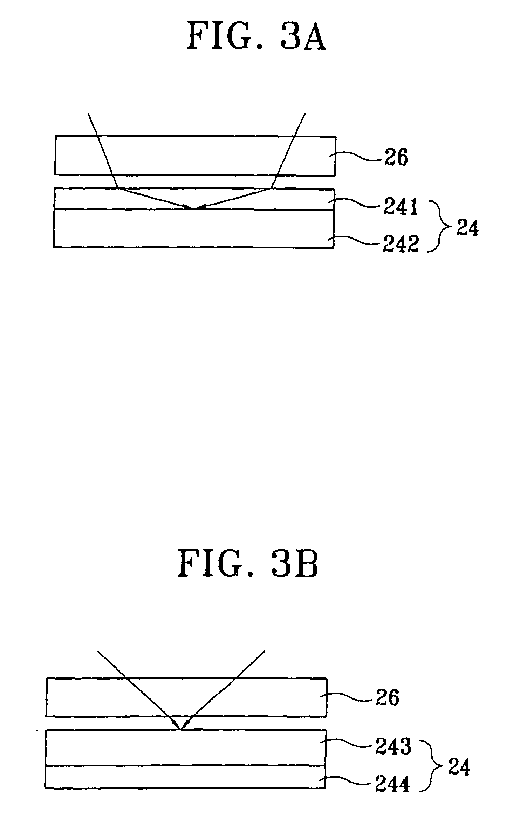

Figure 3A is an enlarged view of a portion "A" in Figures 2A and 2B. Figure 3A shows a layout of layers in the optical recording medium on which a thin metal film is formed, which is applied commonly to the focusing optical systems of Figures 2A and 2B.

In a focusing optical system using a near field, an information recording layer of the optical recording medium 24 is formed on the plane of the optical recording medium opposing the focusing optical system. As shown in Figure 3A, a metal film 241 is formed on the information recording layer in the optical recording medium 24 according to the present invention. Accordingly, the light incident from the objective lens such as the SIL 26 passes through the metal film 241 and is incident to the information recording layer 242.

If the medium constituting the objective lens 26 has a refractive index of n1 and an incident angle of light incident to the objective lens 26 is θ1, the size w1 of an optical spot formed on the objective lens 26 is given by w1=λ/(n1sinθ1). If the medium constituting the metal film 241 has a refractive index of n2 and an incident angle of light incident to the metal film 241 is θ2, the size w2 of an optical spot formed on the metal film 241 is given by w2=λ/(n2sinθ2).

In the case that light is incident from the focusing device 22 to the metal film 241, if a refractive index of the objective lens 26 is larger than that of the metal film 241, then light incident at a critical angle $θ_c$ is totally reflected from a boundary between the objective lens 26 and the metal film 241. This phenomenon is expressed as the following equation, using Snell's law.

$$n2 = n1 \sin θ_c \ (n1 > n2)$$

To enable the metal film 241 according to embodiments of the present invention to both reflect and transmit the incident light, the light incident to the metal film 241 should be incident with an incident angle smaller than the critical angle. Thus, the constituent condition of the metal film 241 satisfies the following relationship.

$$n1Sinθ1<n2<n1.$$

Now, the phenomenon in the metal film 241 of the light incident from the objective lens 26 to the metal film 241 will be described below.

Part of the light incident from the objective lens 26 to the metal film 241 is reflected and part thereof is transmitted to the metal film 241. In general, in the case that a medium is a dielectric, an electron-hole pair reacts with an electric field or a magnetic field of light and thus light is refracted when the light transmits through the dielectric. However, since metal has only free electrons, a reaction between an electron-hole pair and light is not accomplished. Instead, since free electrons react with light, a refraction phenomenon occurring when light transmits through metal can be ignored. As described above, since light incident to metal is not refracted and maintains an incident angle, the term "sinθ2" is not varied from the equation w2=λ/(n2Sinθ2). Thus, the optical spot size can be reduced in accordance with just the refractive index of the metal.

The metal used as a metal film 241 according to embodiments of the present invention is one of metal having a refractive index smaller than one, such suitable metals being, for instance, copper, silver, gold and sodium. Also, the thickness of the metal film 241 should have a value which is less than the wavelength of light. It is preferable that the sum of the metal film 241 and the air gap has a value which is less than the wavelength of the light used.

The thin metal film according to embodiments of the present invention can be formed on the objective lens 26 opposing the optical recording medium. As shown in Figure 3B, the thin metal film 244 can be formed beneath the information recording layer 243, that is, on the other surface of the information recording layer 243 farther from the objective lens 26, interposing the information recording layer 243. In any case, a thin metal film should be formed within a depth of focus.

Also, a dielectric can be formed as a protective layer on the metal film 241. Even in this case, It is preferable that sum of the thickness of the metal film, the thickness of the protective layer, and the air gap does not exceed the wavelength of light.

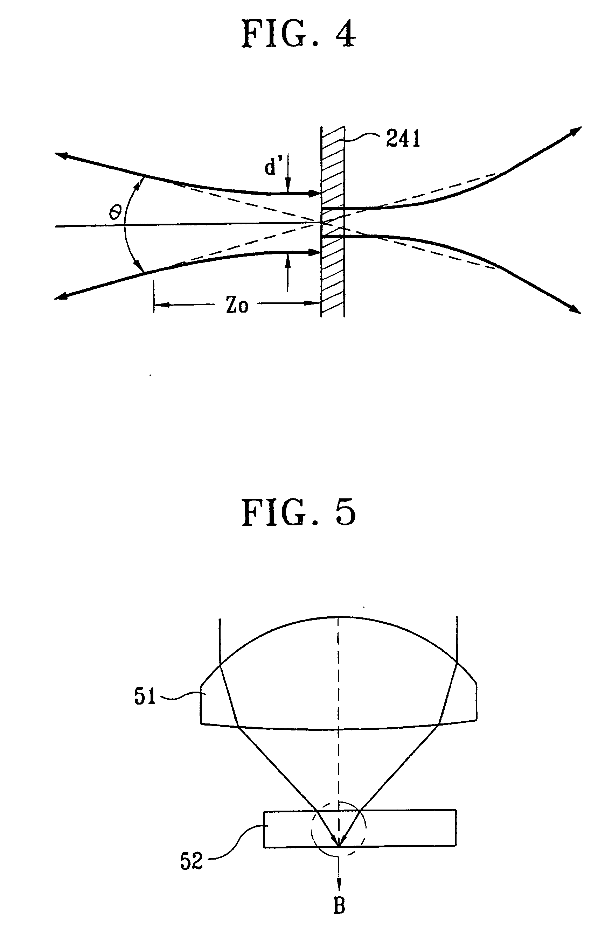

Figure 4 shows that a part of the light incident from the optical recording medium is reflected and part thereof is transmitted by the thin metal film 241.

Figure 5 shows an optical recording medium and a focusing optical system using a far field according to another embodiment of the present invention.

The focusing optical system of Figure 5 includes an objective lens 51 focusing incident light. A reference numeral 52 represents an optical recording medium.

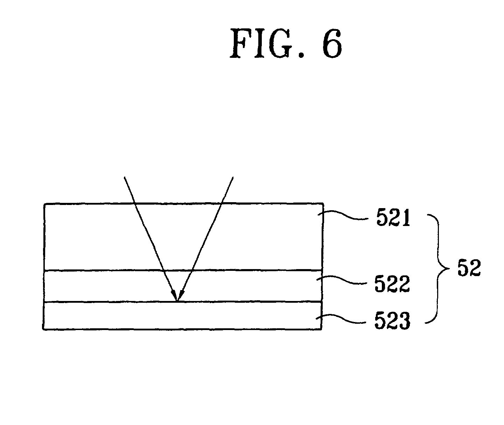

Figure 6 is an enlarged view showing a portion "B" in Figure 5. As shown in Figure 6, a protective layer 521 of the optical recording medium 52, a thin metal film 522 and an information recording layer 523 are arranged in turn starting from an incident direction of light. Here, a relationship of n1Sinθ1<n2<n1 is formed among the refractive index n1 of the objective lens 51, the incident angle 01 of light and the refractive index n2 of the thin metal film. As described above, the thin metal film 522 is a coated film formed of any one of copper, silver, gold and sodium whose refractive index is smaller than one. Also, the thickness of the thin metal film 522 has a value within the wavelength of light.

As in Figure 3B, the thin metal film 522 can be formed beneath the information recording layer 523.

As described above, the thin metal film 522 according to embodiments of the present invention is formed on the information recording layer 523 of the optical recording medium 52 opposing the objective lens 51 or on the other surface of the information recording layer farther from the objective lens, interposing the information recording layer. Therefore, part of light incident to the optical recording medium is reflected and part thereof is transmitted. As a result, the size of the optical spot focused on the optical recording medium 52 is reduced by the function of the metal film.

As described above, in an optical recording medium according to embodiments of the present invention, the optical spot size can be reduced in a relatively simple manner, thereby providing an effect of enhancing a recording density of the optical recording medium.

**Claims**

1. An optical recording system on which an optical spot is formed by a focusing device (26) upon an optical recording medium (24), the optical recording medium comprising:

   a metal film (241) which is formed on an information recording layer (242) opposing the focusing device (26), for reflecting light incident from the focusing device (26);

   **characterised by**:

   the metal film also transmitting light incident from the focusing device;

   wherein a relationship of n1Sinθ1<n2<n1 is satisfied where n1 is a refractive index of the focusing device (26), θ1 is an incident angle, and n2 is a refractive index of the metal film (24), and wherein n2 is less than one.

2. The optical recording system of claim 1, wherein the thickness of said metal film (241) has a value which is less than a wavelength of the light incident from the focusing device (26).

3. The optical recording system of claim 1 or 2, wherein said metal film (241)is formed within a depth of focus of the focusing device (26).

4. The optical recording system of any preceding claim, wherein said metal film comprises any one of copper, silver, gold and sodium.

5. An optical recording medium adapted for use with the optical recording system of any preceding claim.

6. An optical recording system on which an optical spot is formed by a focusing device (26), the optical recording medium (24) comprising:

   a metal film (244) which is formed on a surface of an information recording layer (243) for reflecting incident light;

   **characterised by**:

   the metal layer being formed on a surface of an information recording layer of the medium furthest away from the focussing device (26) such that, the information recording layer (243) is interposed between the metal film (244) and the focusing device (26), the metal film (244), also for transmitting light incident from the focusing device (26),

   wherein a relationship of n1Sinθ1<n2<n1 is satisfied where n1 is a refractive index of the focusing device, θ1 is an incident angle, and n2 is a refractive index of the metal film, and wherein n2 is less than one.

7. An optical recording medium adapted for use with the optical recording system of claim 6.

8. An objective lens generating near field, the objective lens (26) comprising:

a lens portion for reflecting and refracting an incident light and focusing the incident light on information recording layer of an optical recording medium; and

a metal film which is formed on the lens portion opposing the information recording layer of the optical recording medium, for reflecting and transmitting light incident from the lens portion,

wherein a relationship of n1Sinθ1<n2<n1 is satisfied wherein n1 is a refractive index of the lens portion, θ1 is an incident angle, and n2 is a refractive index of the metal film, and wherein n2 is less than one.

**Patentansprüche**

1. Optisches Aufzeichnungssystem, bei dem ein Lichtpunkt durch eine Fokussiervorrichtung (26) auf einem optischen Aufzeichnungsmedium (24) ausgebildet wird, wobei das optische Aufzeichnungsmedium umfasst:

eine Metall-Dünnschicht (241 ), die auf einer Informationsaufzeichnungsschicht (242) gegenüber der Fokussiervorrichtung (26) ausgebildet ist, um von der Fokussiervorrichtung (26) auftreffendes Licht zu reflektieren; **dadurch gekennzeichnet, dass:**

die Metaif-Dünnschicht auch Licht durchlässt, das von der Fokussiervorrichtung auftrifft;

wobei eine Beziehung n1sinθ1<n2<n1 erfüllt wird, n1 ein Brechungsindex der Fokussiervorrichtung (26) ist, θ1 ein Auftreffwinkel ist und n2 ein Brechungsindex der Metall-Dünnschicht (24) ist, und wobei n2 kleiner ist als 1.

2. Optisches Aufzeichnungssystem nach Anspruch 1, wobei die Dicke der Metall-Dünnschicht (241) einen Wert hat, der kleiner ist als eine Wellenlänge des Lichtes, das von der Fokussiervorrichtung (26) auftrifft.

3. Optisches Aufzeichnungssystem nach Anspruch 1 oder 2, wobei die Metall-Dünnschicht (241) innerhalb einer Schärfentiefe der Fokussiervorrichtung (26) ausgebildet ist.

4. Optisches Aufzeichnungssystem nach einem der vorangehenden Ansprüche, wobei die Metall-Dünnschicht Kupfer, Silber, Gold oder Natrium umfasst

5. Optisches Aufzeichnungsmedium, das zum Einsatz mit dem optischen Aufzeichnungssystem nach einem der vorangehenden Ansprüche eingerichtet ist.

6. Optisches Aufzeichnungssystem, bei dem ein Lichtpunkt durch eine Fokussiereinrichtung (26) ausgebildet wird, wobei das optische Aufzeichnungsmedium (24) umfasst:

eine Metall-Dünnschicht (244), die auf einer Oberfläche einer Informationsaufzeichnungsschicht (243) ausgebildet ist, um auftreffendes Licht zu reflektieren;

**dadurch gekennzeichnet, dass:**

die Metallschicht auf einer Oberfläche einer informationsaufzeichnungsschicht des Mediums am weitesten von der Fokussiervorrichtung (26) entfernt ausgebildet ist, so dass die Informationsaufzeichnungsschicht (243) zwischen der Metall-Dünnschicht (244) und der Fokussiervorrichtung (26) angeordnet ist und die Metall-Dünnschicht (244) auch dazu dient, Licht durchzulassen, das von der Fokussiervorrichtung (26) auftrifft,

wobei eine Beziehung n1sinθ1<n2<n1 erfüllt wird, n1 ein Brechungsindex der Fokussiervorrichtung ist, θ1 ein Auftreffwinkel ist und n2 ein Brechungsindex der Metall-Dünnschicht ist, und wobei n2 kleiner ist als 1.

7. Optisches Aufzeichnungsmedium, das für den Einsatz mit dem optischen Aufzeichnungssystem nach Anspruch 6 eingerichtet ist.

8. Objektivlinse zum Erzeugen von Nahfeld, wobei die Objektivlinse (26) umfasst:

einen Linsenabschnitt zum Reflektieren und Brechen eines auftreffenden Lichtes und Fokussieren des auftreffenden Lichtes auf eine Informationsaufzeichnungsschicht eines optischen Aufzeichnungsmediums; und
eine Metall-Dünnschicht, die auf dem Linsenabschnitt gegenüber der Informationsaufzeichnungsschicht des optischen Aufzeichnungsmediums ausgebildet ist, um von dem Linsenabschnitt auftreffendes Licht zu reflektieren und durchzulassen,

wobei eine Beziehung n1 sinθ1 <n2<n1 erfüllt wird, n1 ein Brechungsindex des Linsenabschnitts ist, θ1 ein Auftreffwinkel ist und n2 ein Brechungsindex der Metall-Dünnschicht ist, und wobei n2 kleiner ist als 1.

## Revendications

1. Système d'enregistrement optique, dans lequel un spot optique est formé par un dispositif de focalisation (26) sur un support d'enregistrement optique (24), le support d'enregistrement optique comprenant:

   un film métallique (241), qui est formé sur une couche d'enregistrement d'informations (241) située à l'opposé du dispositif de focalisation (26), pour la réflexion d'une lumière incidente provenant du dispositif de focalisation (26);

   **caractérisé en ce que**:

   le film métallique transmet également une lumière arrivant du dispositif de focalisation;

   dans lequel une relation n1 sin θ1 < n2 < n1 est satisfaite, n1 étant un indice de réfraction du dispositif de focalisation (26), θ un angle d'incidence et n2 un indice de réfraction du film métallique (24), et n2 étant inférieur à un.

2. Système d'enregistrement optique selon la revendication 1, dans lequel l'épaisseur dudit film métallique (241) possède une valeur qui est inférieure à une longueur d'onde de la lumière incidente provenant du dispositif de focalisation (26).

3. Système d'enregistrement optique selon la revendication 1 ou 2, dans lequel ledit film métallique (241) est formé dans une profondeur de focalisation du dispositif de focalisation (26).

4. Système d'enregistrement optique selon l'une quelconque des revendications précédentes, dans lequel ledit film métallique comprend l'un quelconque de cuivre, d'argent, d'or et de sodium.

5. Support d'enregistrement optique adapté pour être utilisé avec un système d'enregistrement optique selon l'une quelconque des revendications précédentes.

6. Système d'enregistrement optique, sur lequel un spot optique est formé par un dispositif de focalisation (26), le support d'enregistrement optique (24) comprenant:

   un film métallique (244), qui est formé sur la surface d'une couche d'enregistrement d'informations (243) pour réfléchir une lumière incidente; et

   **caractérisé en ce que**:

   la couche métallique est formée sur une surface d'une couche d'enregistrement d'informations du support, qui est la plus éloignée du dispositif de focalisation (26) de telle sorte que la couche d'enregistrement d'informations (243) est intercalée entre le film métallique (244) et le dispositif de focalisation (26), le film métallique (244) également pour la transmission d'une lumière incidente arrivant du dispositif de focalisation (26),

   dans lequel une relation n1 sin θ1 < n2 < n1 est satisfaite, n1 étant un indice de réfraction du dispositif de focalisation, 0 un angle d'incidence et n2 un indice de réfraction du film métallique, et n2 étant inférieur à un.

7. Support d'enregistrement optique adapté pour être utilisé avec le système d'enregistrement optique de la revendication 6.

8. Objectif produisant un champ proche ou de proximité, l'objectif (26) comprenant:

   une partie formant lentille pour réfléchir et réfracter une lumière incidente et focaliser la lumière incidente sur une couche d'enregistrement d'informations d'un support d'enregistrement optique; et
   un film métallique, qui est formé sur la partie formant lentille à l'opposé de la couche d'enregistrement d'informations du support d'enregistrement optique pour réfléchir et transmettre une lumière arrivant de la partie formant lentille,

   dans lequel une relation n1 sin θ1 < n2 < n1 est satisfaite, n1 étant un indice de réfraction du dispositif de focalisation (26), θ un angle d'incidence et n2 un indice de réfraction du film métallique (24), et n2 étant inférieur à un.

# FIG. 1

# FIG. 2A

# FIG. 2B

# FIG. 3A

26

241 ⎫
      ⎬ 24
242 ⎭

# FIG. 3B

26

243 ⎫
      ⎬ 24
244 ⎭

# FIG. 4

# FIG. 5

# FIG. 6